# EUROPÄISCHE PATENTANMELDUNG

(11) **EP 2 644 440 A2**
(43) Veröffentlichungstag der Anmeldung: **02.10.2013**
(21) Anmeldenummer: 13159501.9
(22) Anmeldetag: 15.03.2013
(51) Int. Cl.: B60L 11/18

(54) **Verfahren und Vorrichtung zum Management von Ladestationen für Elektrofahrzeuge**

(30) Priorität: 27.03.2012 DE 102012204850
(71) Anmelder: Ford Global Technologies, LLC, Dearborn, MI 48126 (US)
(72) Erfinder: Spahl, Robert, Dr., 51109 Köln (DE)
(74) Vertreter: Dörfler, Thomas

(57) **Zusammenfassung**

Die Erfindung betrifft ein Verfahren und eine Vorrichtung zum Management von Ladestationen (2, 8) für Elektrofahrzeuge (A, B) unter Verwendung eines Nachrichtenaustauschs zwischen einem Ladestations-Managementgerät und Geräten, die jeweils einem Elektrofahrzeug bzw. dessen Fahrer zugeordnet sind. Wenn das Ladestations-Managementgerät eine Ladeanforderung empfängt, die in der aktuellen Belegungssituation nicht erfüllt werden kann, sendet das Ladestations-Managementgerät in Abhängigkeit von dem aktuellen Ladezustand jedes belegenden Elektrofahrzeugs erstens an ein Gerät, das einem belegenden Elektrofahrzeug (A) zugeordnet ist, eine Nachricht, welche die Aufforderung enthält, die das entsprechende Elektrofahrzeug (A) ladende Ladestation (2, 8) jetzt oder bis zu einem bestimmten Zeitpunkt freizugeben, und zweitens an das Gerät, von dem das Ladestations-Managementgerät die Ladeanforderung empfangen hat, eine Nachricht, welche Informationen enthält, ob und ggf. wann voraussichtlich eine Ladestation frei wird.

## Beschreibung

Die Erfindung betrifft ein Verfahren und eine Vorrichtung zum Management von Ladestationen für Elektrofahrzeuge unter Verwendung eines Nachrichtenaustauschs zwischen einem Ladestations-Managementgerät und Geräten, die jeweils einem Elektrofahrzeug bzw. dessen Fahrer zugeordnet und zu Mobilkommunikation fähig sind, gemäß den Oberbegriffen der unabhängigen Patentansprüche.

Die gegenwärtig verfügbaren Elektrofahrzeuge unterliegen hinsichtlich ihrer Reichweite und ihrer Lademöglichkeiten in der Praxis gewissen Beschränkungen im Vergleich zu mit konventionellen Brennkraftmaschinen betriebenen Fahrzeugen. Beispielsweise muss ein Fahrer eines Elektrofahrzeugs eine längere Route mit einem Ziel außerhalb der aktuellen Batteriereichweite möglicherweise so planen, dass er das Fahrzeug an öffentlichen Ladestellen nachladen kann; oder der Fahrer ist möglicherweise wegen unvorhergesehener Probleme zu einem unerwarteten Nachladen gezwungen, z.B. wegen einer Fehlfunktion oder weil ein rechtzeitiger Ladevorgang vergessen wurde. Öffentliche Ladestellen für Elektrofahrzeuge sind jedoch selten, was sich voraussichtlich zumindest mittelfristig nicht ändern wird. Daher kommt es leicht vor, dass eine öffentliche Ladestelle schon belegt ist, wenn ein Elektrofahrzeug dort ankommt.

Die EP 2 362 362 A1 offenbart ein gattungsgemäßes Verfahren zum Management von Ladestationen für Elektrofahrzeuge, bei dem Benutzer freie Ladestationen rasch auffinden können, indem Ladeanforderungen bereits während der Fahrt abgesetzt und Verfügbarkeitsbenachrichtigungen rechtzeitig empfangen werden können. Dieses Verfahren nützt aber wenig, wenn im Zielgebiet gar keine freie Ladestation existiert.

Die DE 10 2008 055 881 A1 offenbart ein Verfahren zum automatischen Laden von selbstgesteuerten Elektrofahrzeugen. Die Selbststeuerung erlaubt es, ein vollgeladenes Fahrzeug bei Bedarf auch zu einem Platz ohne Ladegerät umzusetzen, um Überkapazitäten an Ladestationen zu vermeiden.

Der Erfindung liegt die Aufgabe zu Grunde, ein Verfahren und eine Vorrichtung zum Management von Ladestationen für von Menschen gesteuerte Elektrofahrzeuge bereitzustellen, mit denen sowohl die Nutzerbedürfnisse besser erfüllt werden können als auch der Ausnutzungsgrad von Ladestationen gesteigert werden kann.

Diese Aufgabe wird durch ein Verfahren und eine Vorrichtung mit den Merkmalen der unabhängigen Patentansprüche gelöst. Vorteilhafte Weiterbildungen der Erfindung sind in den abhängigen Ansprüchen angegeben.

Bei der Erfindung kann auch der Fahrer eines Elektrofahrzeuges, der in gewohnter Erwartung einer freien Ladestation oder wegen unvorhergesehener Umstände an einer Ladestation oder Gruppe von Ladestationen eintrifft und feststellt, dass gerade keine Ladestation frei ist, immer noch eine Ladeanforderung senden, die in diesem Fall als Wunsch behandelt wird, eine Ladestation freigeben zu lassen, sobald diese nicht mehr benötigt wird.

Das Ladestations-Managementgerät, das eine oder mehrere Ladestationen verwaltet und eine derartige Ladeanforderung empfängt, die gerade nicht erfüllt werden kann, prüft den aktuellen Ladezustand des Elektrofahrzeugs oder aller Elektrofahrzeuge, die die eine oder mehreren Ladestationen gerade belegen. Wenn das Ladestations-Managementgerät feststellt, dass die Ladeanforderung an sich entweder sofort oder innerhalb einer mit der Ladeanforderung angegebenen Zeitspanne erfüllt werden könnte, weil ein belegendes Elektrofahrzeug schon vollständig geladen ist oder weil es rechtzeitig vollständig geladen sein wird, sendet es sofort oder zu gegebener Zeit an ein Gerät, das dem belegenden Elektrofahrzeug zugeordnet ist, eine Nachricht, welche die Aufforderung enthält, die das entsprechende Elektrofahrzeug ladende Ladestation jetzt oder bis zu einem bestimmten Zeitpunkt freizugeben. Außerdem sendet das Ladestations-Managementgerät an das Gerät, von dem es die Ladeanforderung empfangen hat, eine Nachricht zurück, welche Informationen enthält, ob und ggf. wann mit einer freien Ladestation zu rechnen ist.

Auf diese Weise werden öffentliche Ladestationen nicht unnötig von fertig geladenen Elektrofahrzeugen blockiert und können besser ausgenutzt werden. Fahrer von ankommenden Elektrofahrzeugen haben bessere Chancen, eine Ladestation nutzen zu können, und der höhere erzielbare Ausnutzungsgrad der Ladestationen erhöht die Bereitschaft seitens der Betreiber, Ladestationen zu errichten.

In einer bevorzugten Ausführungsform der Erfindung prüft das Ladestations-Managementgerät bei Empfang der Ladeanforderung, ob es ein belegendes Elektrofahrzeug gibt, das vollständig geladen ist, und bejahendenfalls sendet es an das diesem Elektrofahrzeug zugeordnete Gerät die Aufforderung, die dieses Elektrofahrzeug ladende Ladestation jetzt oder bis zu einem bestimmten Zeitpunkt freizugeben.

Falls sich gerade kein vollständig geladenes Elektrofahrzeug an einer Ladestation befindet, kann das Ladestations-Managementgerät außerdem prüfen, ob es ein Elektrofahrzeug gibt, das momentan noch geladen wird, das aber innerhalb einer zusammen mit der Ladeanforderung angegebenen Zeitspanne, die der voraussichtlichen Aufenthaltsdauer des Elektrofahrzeugs entspricht, für das die Ladeanforderung empfangen wurde, so frühzeitig geladen sein wird, dass auch das Elektrofahrzeug, für das die Ladeanforderung empfangen wurde, danach noch geladen werden kann. Falls es ein derartiges Elektrofahrzeug an einer Ladestation gibt, sendet das Ladestations-Managementgerät an das zugeordnete Gerät die Aufforderung, die das entsprechende Elektrofahrzeug ladende Ladestation bis dem von ihm bestimmten Zeitpunkt freizugeben. Außerdem sendet es Informationen, wann voraussichtlich eine Ladestation frei wird, an das Gerät, von dem die Ladeanforderung empfangen wurde. Der Fahrer des einen Ladevorgang anfordernden Elektrofahrzeugs kann dieses dann zunächst auf einem anderen Stellplatz parken. Sobald die Ladestation frei geworden ist, z. B. weil das vollständig geladene Elektrofahrzeug davon entfernt wurde, kann der Fahrer des einen Ladevorgang anfordernden Elektrofahrzeugs z. B. zu der frei gewordenen Ladestation umparken.

Eine Freigabe der Ladestation und deren anschließende Nutzung durch ein anderes Elektrofahrzeug kann aber auch auf andere Weise als durch Wegfahren des einen Elektrofahrzeugs und Umparken des anderen Elektrofahrzeugs erfolgen. So kann in vielen Fällen eine Ladestation auch von mehr als einem Stellplatz aus genutzt werden. In solchen Fällen genügt es, wenn eine entsprechende elektrische Verbindung, ob mittels eines Ladekabels oder berührungslos, etwa induktiv, getrennt wird und damit zur Nutzung durch ein anderes Elektrofahrzeug verfügbar wird.

Falls die Ladeanforderung an dem gewünschten Ort nicht oder nicht wie gewünscht erfüllt werden kann, kann das Ladestations-Managementgerät noch prüfen, ob es eine andere Ladestation in der Nähe vorschlagen kann. Wenn auch dies nicht möglich ist, sendet das Ladestations-Managementgerät eine entsprechende Nachricht an das Gerät, von dem die Ladeanforderung empfangen wurde.

Vorzugsweise sendet das Ladestations-Managementgerät die Nachricht, welche Informationen enthält, ob und ggf. wann voraussichtlich eine Ladestation frei wird, erst dann, wenn es von dem Gerät, an das es die Aufforderung gesendet hat, die das entsprechende Elektrofahrzeug ladende Ladestation jetzt oder bis zu einem bestimmten Zeitpunkt freizugeben, eine Bestätigung erhalten hat, dass man die Ladestation wie gewünscht freigeben wird.

In einer bevorzugten Ausführungsform der Erfindung kann das Gerät, von dem aus eine Ladeanforderung gesendet werden soll, auf eine besonders einfache Weise zum Senden der Ladeanforderung veranlasst werden, indem man es ein an einer Ladestation angebrachtes optisches Muster oder Symbol erkennen lässt, welches z. B. ein Logo, ein QR-Code, die Form der Ladesäule oder ein anderes Merkmal sein kann. Ein QR-Code ist ein zweidimensionaler optischer Code, den die meisten Smartphones lesen können. Alternativ kann das Gerät eine drahtlose Kurzreichweiten-Verbindung aufnehmen (zum Beispiel über NFC, RFID oder Bluetooth), welche entweder das Gerät veranlasst, die Ladeanfrage über seine Mobilkommunikation zu senden oder direkt die nötigen Daten für die Ladeanfrage mit der Ladestation austauscht. Als weitere Alternative könnte die dem Gerät bekannte eigene Position verwendet werden, um automatisch zu erkennen, wohin die Ladeanforderung zu senden ist. Dies erspart einem Benutzer die Mühe, in Erfahrung zu bringen, wie und wohin eine Ladeanforderung zu senden ist.

Die Erfindung ist aber nicht auf Fälle beschränkt, in denen eine Ladeanforderung erst bei Ankunft an einer Ladestation gesendet wird, sondern es können Ladeanforderungen auch von Unterwegs oder noch früher gesendet werden, wie es an sich bekannt ist, und dann gemäß der Erfindung behandelt werden. So kann in einem Mobiltelefon oder Autotelefon ein Link mit einer Telefonnummer des Ladestations-Managementgeräts gespeichert sein, bei dessen Aktivierung durch den Fahrer eine Ladeanforderung gesendet wird.

Das Ladestations-Managementgerät kann ein Steuergerät einer einzelnen Ladestation sein, oder es kann ein zentrales Steuergerät oder Managementsystem für mehrere Ladestationen sein.

Die Geräte, die jeweils einem Elektrofahrzeug bzw. dessen Fahrer zugeordnet sind, sind vorzugsweise Mobilfunkgeräte, worunter hier nicht nur Mobiltelefone und Smartphones verstanden werden, sondern auch andere mobile und zu Fernkommunikation fähige Geräte wie z.B. Fahrzeugnavigationssysteme und Tablet-Computer. So kann z.B. ein Fahrzeugnavigationssystem automatisch eine Ladeanforderung an das Ladestations-Managementgerät senden, wenn es feststellt, dass die Fahrt zu einer Ladestation führt und ein Nachladen wünschenswert ist.

Die zwischen den verschiedenen Geräten ausgetauschten Nachrichten können z.B. SMS- oder E-Mail-Nachrichten sein oder ein anderes geeignetes Format haben. Die Erfindung ist nicht auf rein elektrisch angetriebene Fahrzeuge beschränkt, sondern es werden hier unter Elektrofahrzeugen auch teilweise elektrisch angetriebene Fahrzeuge verstanden.

Es folgt eine Beschreibung von Ausführungsbeispielen anhand der Zeichnungen. Darin zeigen:
- Fig. 1a-1e: schematische Darstellungen eines Beispiels für an einer Ladestation auftretende Situationen;
- Fig. 2: ein Flussdiagramm eines Verfahrens zum Management von Ladestationen für Elektrofahrzeuge entsprechend dem Beispiel von Fig. 1a-1e;
- Fig. 3a-3e: schematische Darstellungen eines anderen Beispiels für an einer Ladestation auftretende Situationen; und
- Fig. 4: ein Flussdiagramm eines Verfahrens zum Management von Ladestationen für Elektrofahrzeuge entsprechend dem Beispiel von Fig. 3a-3e.

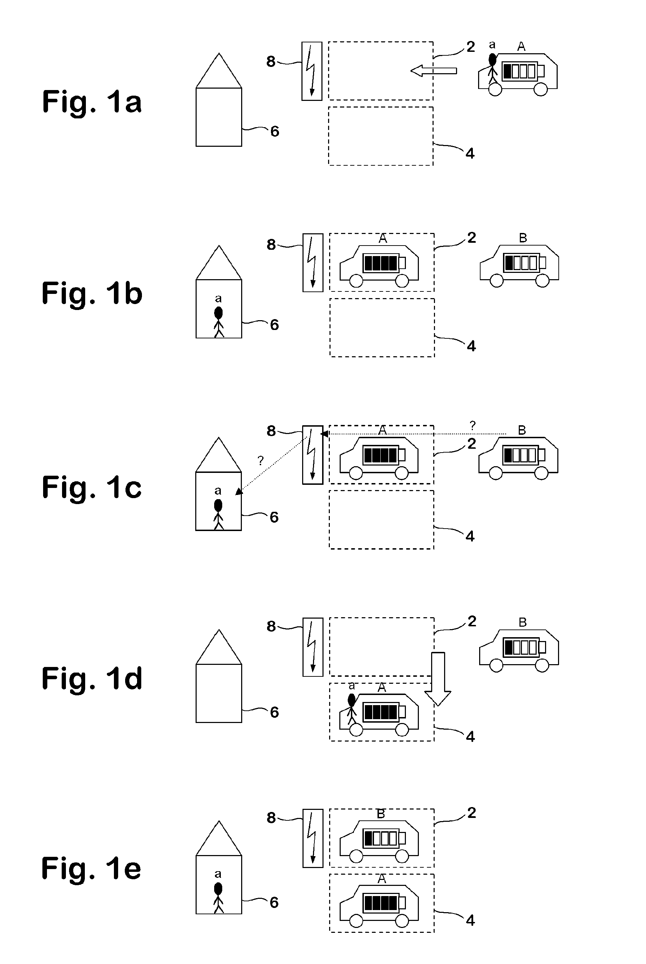

In Fig. 1a kommt am Morgen ein Elektrofahrzeug A mit einem Fahrer a am Gebäude 6 an, in dem sich der Arbeitsplatz des Fahrers a befindet. Der Fahrer a parkt das Elektrofahrzeug A auf einen Stellplatz 2 am oder im Gebäude 6 und stellt eine elektrische Verbindung zwischen dem Elektrofahrzeug A und dem Ladegerät 8 her, um die Batterien des Elektrofahrzeugs A aufzuladen, die in diesem Zeitpunkt fast leer sind, wie schematisch eingezeichnet.

In Fig. 1 b kommt am Nachmittag ein weiteres Elektrofahrzeug B am Gebäude 6 an, dessen Batterien ebenfalls geladen werden müssen. Das Elektrofahrzeug A ist inzwischen vollständig geladen, belegt aber noch die Ladestation 2, 8.

In Fig. 1c sendet der Fahrer des Elektrofahrzeugs B jetzt über sein Mobiltelefon oder irgendein anderes zu Mobilkommunikation fähiges Gerät eine Ladeanforderung an das Ladestations-Managementgerät, wie schematisch mit einem punktierten Pfeil eingezeichnet. Das Ladestations-Managementgerät stellt fest, dass das belegende Elektrofahrzeug A vollständig geladen ist, und sendet an ein Mobiltelefon des im Gebäude 6 befindlichen Fahrers a eine Nachricht, welche die Aufforderung enthält, sein Elektrofahrzeug A jetzt von der Ladestation 2, 8 zu entfernen.

In Fig. 1 d parkt der Fahrer a daraufhin sein Elektrofahrzeug A um, indem er es vom Stellplatz 2 auf einen freien Stellplatz 4 ohne Ladegerät stellt, wie mit einem Konturenpfeil angedeutet.

Jetzt kann das Elektrofahrzeug B auf den Stellplatz 2 gefahren und mittels des Ladegeräts 8 geladen werden, wie in Fig. 1e gezeigt. Der Fahrer a des Elektrofahrzeugs A kann wieder in das Gebäude 6 zurückkehren.

Bei entsprechenden Gegebenheiten vor Ort genügt es möglicherweise, das Ladekabel oder dergleichen zwischen den beiden Elektrofahrzeugen zu wechseln.

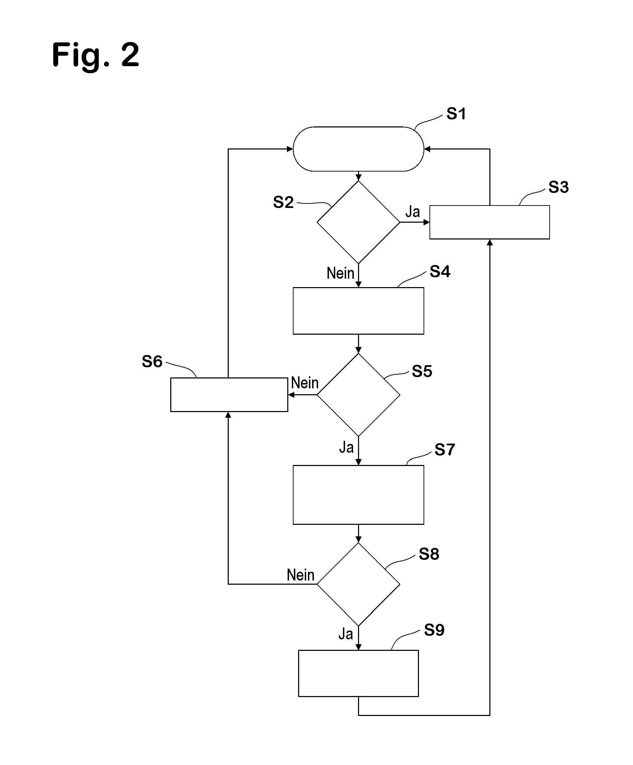

Fig. 2 zeigt ein Flussdiagramm des Verfahrens zum Management von Ladestationen entsprechend dem Beispiel von Fig. 1a-1e, wobei jedoch mehrere Stellplätze vorgesehen sein können, die mit Ladestationen ausgestattet sind.

Zu Beginn des Verfahrens, in Schritt S1, kommt das Elektrofahrzeug B an einem Parkplatz mit Stellplätzen an, von denen einige als Ladestationen eingerichtet sind. Je nachdem, ob eine Ladestation frei ist oder nicht (Schritt S2), benutzt das Elektrofahrzeug B eine freie Ladestation (Schritt S3), woraufhin auf das nächste ankommende Elektrofahrzeug gewartet wird (Schritt S1), oder das Ladestations-Managementgerät prüft den Ladezustand der die Ladestationen belegenden Elektrofahrzeuge (Schritt S4). Wird in Schritt S5 festgestellt, dass keines der Elektrofahrzeuge vollständig geladen ist, kann dem Elektrofahrzeug B keine Ladestation angeboten werden, und dies wird dann dessen Fahrer mitgeteilt (Schritt S6), und es wird auf das nächste ankommende Elektrofahrzeug gewartet (Schritt S1). Wird in Schritt S5 festgestellt, dass das Elektrofahrzeug A vollständig geladen ist, bittet das Ladestations-Managementgerät in Schritt S7 dessen Fahrer, das Elektrofahrzeug A von dessen Ladestation zu entfernen. Wenn dieser Fahrer in Schritt S8 bestätigt, dass er dieser Bitte Folge leisten wird, sendet das Ladestations-Managementgerät an den Fahrer des Elektrofahrzeugs B eine Nachricht, einige Minuten zu warten, bis das Elektrofahrzeug A von der Ladestation 2, 8 entfernt ist (Schritt S9), woraufhin das Elektrofahrzeug B die Ladestation benutzen kann (Schritt S3).

Wenn der Fahrer des Elektrofahrzeugs A die Bitte im Schritt S8 ablehnt oder nicht antwortet, kann dem Elektrofahrzeug B an diesem Standort keine Ladestation angeboten werden (Schritt S6).

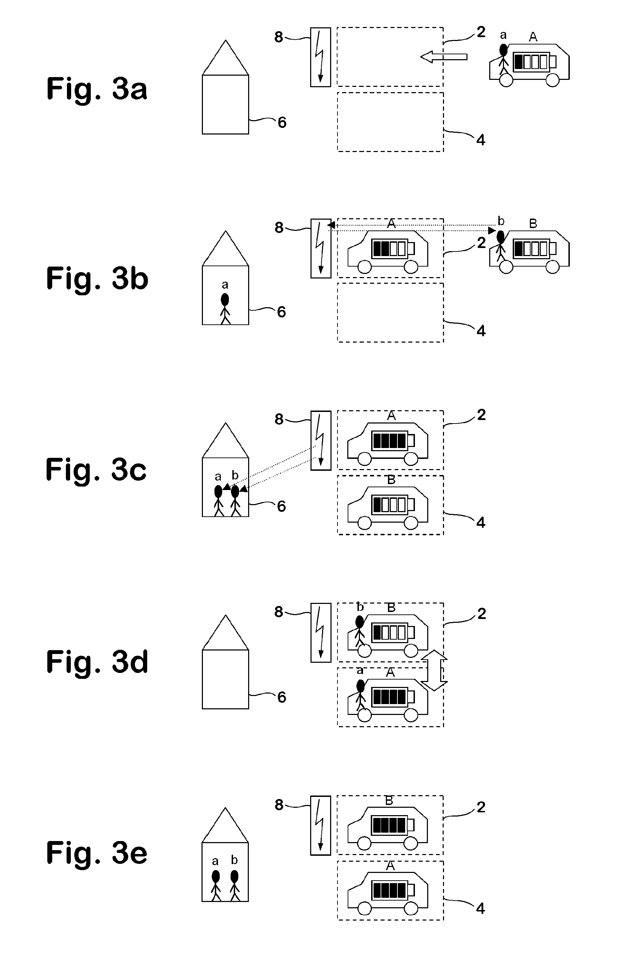

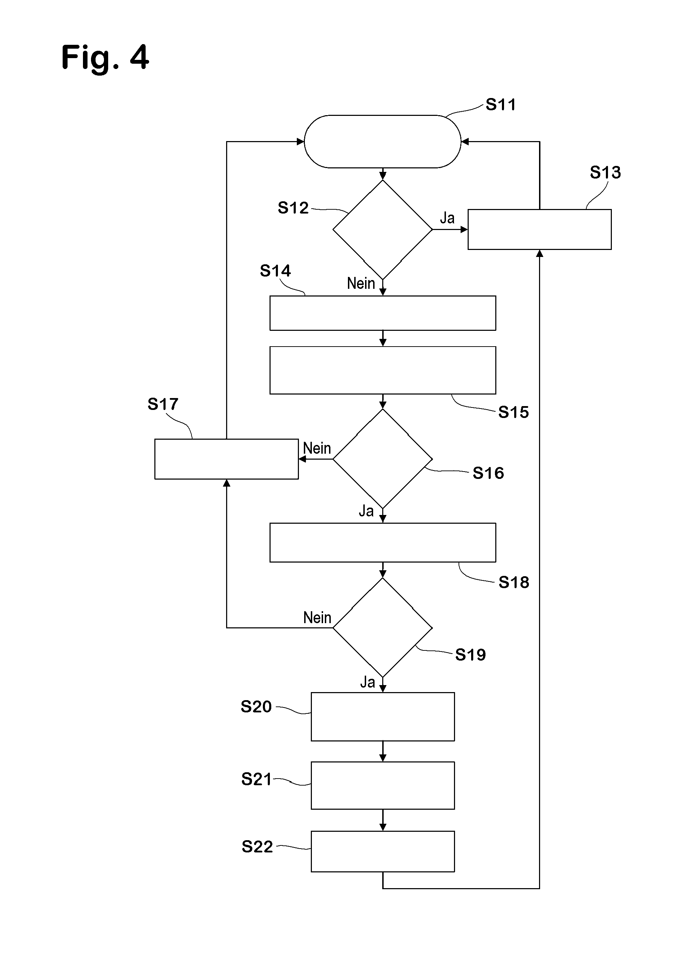

Unter Bezugnahme auf die Figuren 3a bis 3e sowie 4 wird nun ein alternatives bzw. zusätzliches Vorgehen beschrieben, in dem die Zeit, die das Elektrofahrzeug A noch geladen werden muss, wenn das Elektrofahrzeug B eintrifft, mit der Zeit, die das Laden des Elektrofahrzeug B dauern wird, und dessen voraussichtlicher Parkzeit verglichen wird. Bleibt genügend Zeit, um das Elektrofahrzeug B zu laden, nachdem das Elektrofahrzeug A vollständig geladen ist, wird der Fahrer des Elektrofahrzeugs B gebeten, zunächst auf einem gewöhnlichen Stellplatz ohne Ladestation zu parken. Wenn das Elektrofahrzeug A vollständig geladen ist, werden die Fahrer der Elektrofahrzeuge A und B informiert und tauschen die Stellplätze.

In Fig. 3a kommt am Morgen das Elektrofahrzeug A mit dem Fahrer a am Gebäude 6 an, in dem sich der Arbeitsplatz des Fahrers a befindet. Der Fahrer a stellt das Elektrofahrzeug A auf den Stellplatz 2 und stellt eine elektrische Verbindung zwischen dem Elektrofahrzeug A und dem Ladegerät 8 her, um die Batterien des Elektrofahrzeugs A aufzuladen. Der Fahrer a informiert das Ladestations-Managementgerät auch darüber, wann er am Abend voraussichtlich wieder wegfahren wird.

In Fig. 3b kommt später ein unzureichend geladenes Elektrofahrzeug B mit einem Fahrer b, der ebenfalls dort arbeitet, am Gebäude 6 an, und findet die Ladestation 2, 8 belegt vor. Der Fahrer b sendet dann über sein Mobiltelefon eine Ladeanforderung einschließlich der geplanten Parkzeit an das Ladestations-Managementgerät. Das Ladestations-Managementgerät errechnet, dass das Elektrofahrzeug B lange genug vor Ort bleiben wird, um beide Elektrofahrzeuge A und B laden zu können. Das Ladestations-Managementgerät fragt beim Fahrer a des Elektrofahrzeugs A an, ob dieser zu gegebener Zeit einen Ladestationstausch vornehmen kann, und falls dieser zustimmt, teilt es dem Fahrer b des Elektrofahrzeugs B über dessen Mobiltelefon mit, dass sein Ladewunsch später erfüllt werden kann, und bittet ihn, zunächst auf den Stellplatz 4 zu fahren.

Sobald in dieser Situation, wie in Fig. 3c gezeigt, das Elektrofahrzeug A vollständig geladen ist, sendet das Ladestations-Managementgerät entsprechende Informationen an die Mobiltelefone der Fahrer a und b im Gebäude 6.

In Fig. 3d tauschen die Fahrer a und b die Stellplätze ihrer Elektrofahrzeuge A und B, wie mit einem Konturenpfeil angedeutet, und auf dem Stellplatz 2 kann jetzt das Elektrofahrzeugs B mittels des Ladegeräts 8 vollständig geladen werden, wie in Fig. 3e veranschaulicht, während die Fahrer a und b ins Gebäude 6 zurückgekehrt sind.

Fig. 4 zeigt ein Flussdiagramm des Verfahrens zum Management von Ladestationen entsprechend dem Beispiel von Fig. 3a-3e, wobei jedoch mehrere Stellplätze vorgesehen sein können, die mit Ladestationen ausgestattet sind.

Zu Beginn des Verfahrens, im Schritt S11, kommt das Elektrofahrzeug B an einem Parkplatz mit Stellplätzen an, von denen einige als Ladestationen eingerichtet sind. Je nachdem, ob eine Ladestation frei ist oder nicht (Schritt S12), benutzt das Elektrofahrzeug B eine freie Ladestation (Schritt S13), woraufhin auf das nächste ankommenden Elektrofahrzeug gewartet wird (Schritt S11), oder das Elektrofahrzeug B sendet seinen Energiebedarf und die geplante Parkzeit an das Ladestations-Managementgerät (Schritt S14). In Schritt S15 prüft das Ladestations-Managementgerät den Ladezustand der die Ladestationen belegenden Elektrofahrzeuge und berechnet, ob eines der Elektrofahrzeuge so rechtzeitig vollständig geladen sein wird, dass auch das Elektrofahrzeug B in der geplanten Parkzeit vollständig geladen werden kann. Wird im Schritt S16 festgestellt, dass keines der Elektrofahrzeuge diese Bedingung erfüllt, kann dem Elektrofahrzeug B keine Ladestation angeboten werden, was dessen Fahrer mitgeteilt wird (Schritt S17), und es wird auf das nächste ankommende Elektrofahrzeug gewartet (Schritt S1). Wird in Schritt S16 festgestellt, dass das Elektrofahrzeug A die genannte Bedingung erfüllt, bittet das Ladestations-Managementgerät in Schritt S18 dessen Fahrer, das Elektrofahrzeug A zu einem bestimmten Zeitpunkt von dessen Ladestation zu entfernen.

Wenn der Fahrer des Elektrofahrzeugs A diese Bitte ablehnt oder nicht antwortet (Schritt S19), kann dem Elektrofahrzeug B an diesem Standort keine Ladestation angeboten werden (Schritt S17), was dessen Fahrer mitgeteilt wird. Wenn der Fahrer des Elektrofahrzeugs A auf die Bitte im Schritt S19 bestätigt, dass er das Elektrofahrzeug A später wegfahren wird, bittet das Ladestations-Managementgerät den Fahrer des Elektrofahrzeugs B, zunächst auf einem normalen Stellplatz ohne Ladestation zu parken (Schritt S20). Sobald das Elektrofahrzeug A vollständig geladen ist, werden die Fahrer der Elektrofahrzeuge A und B im Schritt S21 vom Ladestations-Managementgerät entsprechend informiert und tauschen im Schritt S22 die Stellplätze ihrer Elektrofahrzeuge A und B, damit auch das Elektrofahrzeug B vollständig geladen werden kann.

## Patentansprüche

1. Verfahren zum Management von Ladestationen (2, 8) für Elektrofahrzeuge (A, B) unter Verwendung eines Nachrichtenaustauschs zwischen einem Ladestations-Managementgerät und Geräten, die jeweils einem Elektrofahrzeug (A, B) bzw. dessen Fahrer zugeordnet sind,
**dadurch gekennzeichnet, dass**,
wenn das Ladestations-Managementgerät eine Ladeanforderung empfängt, die in der aktuellen Belegungssituation nicht erfüllt werden kann, das Ladestations-Managementgerät in Abhängigkeit von dem aktuellen Ladezustand jedes eine Ladestation (2, 8) belegenden Elektrofahrzeugs
- an ein Gerät, das einem belegenden Elektrofahrzeug (A) bzw. dessen Fahrer zugeordnet ist, eine Nachricht sendet, welche die Aufforderung enthält, die das entsprechende Elektrofahrzeug (A) ladende Ladestation (2, 8) jetzt oder bis zu einem bestimmten Zeitpunkt freizugeben (S7; S18), und
- an das Gerät, von dem das Ladestations-Managementgerät die Ladeanforderung empfangen hat, eine Nachricht sendet, welche Informationen enthält, ob und ggf. wann voraussichtlich eine Ladestation (2, 8) frei wird (S6, S9; S17; S20).

2. Verfahren nach Anspruch 1,
**dadurch gekennzeichnet, dass**
das Ladestations-Managementgerät bei Empfang der Ladeanforderung prüft, ob es ein belegendes Elektrofahrzeug (A) gibt, das vollständig geladen ist (S5), und bejahendenfalls an das diesem Elektrofahrzeug (A) zugeordnete Gerät die Aufforderung sendet, die dieses Elektrofahrzeug (A) ladende Ladestation (2, 8) jetzt freizugeben.

3. Verfahren nach Anspruch 1 oder 2,
**dadurch gekennzeichnet, dass**
das Ladestations-Managementgerät bei Empfang der Ladeanforderung prüft, ob es ein belegendes Elektrofahrzeug (A) gibt, das frühzeitig innerhalb einer zusammen mit der Ladeanforderung angegebenen Zeitspanne vollständig geladen sein wird, und bejahendenfalls anhand der Ladeanforderung einen Zeitpunkt bestimmt, bis zu dem die dieses Elektrofahrzeug (A) ladende Ladestation (2, 8) freigegeben sein muss, um die gerade empfangene Ladeanforderung erfüllen zu können (S15, S16), und die Aufforderung sendet, die dieses Elektrofahrzeug (A) ladende Ladestation (2, 8) bis zu dem bestimmten Zeitpunkt freizugeben (S18).

4. Verfahren nach einem der vorhergehenden Ansprüche,
**dadurch gekennzeichnet, dass**
das Ladestations-Managementgerät die Nachricht, welche Informationen enthält, ob und ggf. wann voraussichtlich eine Ladestation (2, 8) frei wird, erst dann sendet, wenn es von dem Gerät, an das es die Aufforderung gesendet hat, das entsprechende Elektrofahrzeug (A) jetzt oder bis zu dem bestimmten Zeitpunkt von der Ladestation zu entfernen, eine Bestätigung erhalten hat, dass man die das entsprechende Elektrofahrzeug (A) ladende Ladestation (2, 8) wie gewünscht freigeben wird (S8, S19).

5. Verfahren nach einem der vorhergehenden Ansprüche,
**dadurch gekennzeichnet, dass**
ein Gerät, von dem aus eine Ladeanforderung gesendet werden soll, dafür eingerichtet ist, zum Senden der Ladeanforderung veranlasst zu werden, indem man es ein an einer Ladestation angebrachtes optisches Muster oder Symbol erkennen lässt, insbesondere ein Logo, einen QR-Code oder eine grafische Wiedergabe der Ladesäule, und/oder dafür eingerichtet ist, eine drahtlose Kurzreichweiten-Verbindung aufzunehmen, um die Ladeanfrage darüber zu senden, und/oder dafür eingerichtet ist, die dem Gerät bekannte eigene Postion zu verwenden, um automatisch zu erkennen, wohin die Ladeanforderung zu senden ist.

6. Vorrichtung zum Management von Ladestationen (2, 8) für Elektrofahrzeuge (A, B) unter Verwendung von Nachrichtenaustausch zwischen einem Ladestations-Managementgerät und Geräten, die jeweils einem Elektrofahrzeug bzw. dessen Fahrer zugeordnet sind,
**dadurch gekennzeichnet, dass**
die Vorrichtung zur Durchführung eines Verfahrens nach einem der vorhergehenden Ansprüche ausgebildet ist.

7. Vorrichtung nach Anspruch 6,
**dadurch gekennzeichnet, dass**
das Ladestations-Managementgerät ein Steuergerät (8) einer einzelnen Ladestation ist.

8. Vorrichtung nach Anspruch 6,
**dadurch gekennzeichnet, dass**
das Ladestations-Managementgerät ein zentrales Steuergerät für mehrere Ladestationen ist.

9. Vorrichtung nach einem der Ansprüche 6 bis 8,
**dadurch gekennzeichnet, dass**
die Geräte, die jeweils einem Elektrofahrzeug (A, B) bzw. dessen Fahrer zugeordnet sind, Mobilfunkgeräte sind.
